# EUROPÄISCHE PATENTSCHRIFT

(11) **EP 3 093 120 B1**
(45) Veröffentlichungstag und Bekanntmachung des Hinweises auf die Patenterteilung: **21.10.2020**
(21) Anmeldenummer: 16168806.4
(22) Anmeldetag: 09.05.2016
(51) Int. Cl.: B29C 51/14, B29C 51/10, B32B 7/02, B32B 19/02, B32B 27/06, B32B 27/18, B32B 37/10

(54) **BRANDSCHUTZ FÜR HALBZEUGE ODER BAUTEILE AUS FASERVERBUNDKUNSTSTOFF**
FIRE PROTECTION FOR SEMIFINISHED PRODUCTS OR COMPONENTS MADE FROM FIBRE COMPOUND PLASTIC
PARE-FEU POUR DEMI-PRODUITS OU COMPOSANTS EN MATIÈRE COMPOSITE FIBREUSE

(30) Priorität: 13.05.2015 DE 102015107572
(43) Veröffentlichungstag der Anmeldung: 16.11.2016
(73) Patentinhaber: svt BRANDSCHUTZ Vertriebsgesellschaft mbH, 21217 Seevetal (DE)
(72) Erfinder: REHER, Reinald, 59379 Selm (DE)
(74) Vertreter: Stüven, Ralf

(56) Entgegenhaltungen:
- EP-A1- 1 106 744
- WO-A1-2013/083268
- JP-A- 2000 345 638
- US-A- 5 344 866

## Beschreibung

Die Erfindung betrifft ein Verfahren zur Herstellung eines brandgeschützten Faserverbundkunststoff-Halbzeugs oder Faserverbundkunststoff-Bauteils, insbesondere eines brandgeschützten Organoblech-Halbzeugs oder Organoblech-Bauteils, und ein brandgeschütztes Faserverbundkunststoff-Halbzeug oder Faserverbundkunststoff-Bauteil, insbesondere ein Organoblech-Halbzeug oder Organoblech-Bauteil.

Faserverbundkunststoffe, beispielsweise Organobleche, werden als Leichtbauwerkstoff in vielen verschiedenen Industriezweigen, z.B. im Automobil- und Flugzeugbau, eingesetzt, um beispielsweise metallische Werkstoffe wie Stahl und Aluminium zu ersetzen. Ein Verfahren zur Herstellung von Organoblechen ist beispielsweise in der DE 102012015448 A1 beschrieben. Ein Verfahren zur Herstellung eines Bauteils aus einem Organoblech ist beispielsweise aus der WO 2011/095399 A1 bekannt. Aus der WO 2013/083268 A1 ist ein faserverstärktes Kompositmaterial bekannt, das eine Oberfläche mit mehreren laminierten Schichten aufweist, die bei Feuereinwirkung expandieren oder delaminieren, und so für einen verbesserten Feuerwiderstand sorgen sollen. Die EP 1106744 A1 beschreibt ein starres Verbundmaterial, das ein feuerhemmendes Faserelement, ein intumeszierendes Material und ein Harz umfasst. Wenn das Verbundmaterial Bedingungen ausgesetzt ist, unter denen die Verkohlung des feuerhemmenden faserigen Elements, des intumeszierenden Materials und des Harzes auftritt, werden die verkohlten Oberflächen des feuerhemmenden faserigen Elements, intumeszierend und Harz miteinander verbunden. Die US 5344866 A beschreibt flammbeständige Polymerverbundstoffe mit einem thermoplastischen Matrixmaterial, verstärkenden Glasfasern und einem wärmeausdehnbaren Material, beispielsweise zur Herstellung einer Verbundwerkstoff-Matte. Die JP 2000345638 A betrifft eine dünne sich bei Hitze ausdehnende Schicht, die zum Brandschutz auf Oberflächen von Baustrukturen aufgebracht werden kann.

Aufgabe der vorliegenden Erfindung ist es, einen einfachen, kostengünstigen und dennoch wirksamen Brandschutz für Faserverbundkunststoff-Halbzeuge oder Faserverbundkunststoff-Bauteile, insbesondere für Organoblech-Halbzeuge und -Bauteile bereit zu stellen.

Zur Lösung der Aufgabe stellt die vorliegende Erfindung in einem ersten Aspekt ein Verfahren zur Herstellung eines brandgeschützten Faserverbundkunststoff-Halbzeugs oder Faserverbundkunststoff-Bauteils bereit, wobei ein Faserverbundkunststoff-Halbzeug oder ein Faserverbundkunststoff-Bauteil mit einer mindestens ein Flammschutzadditiv umfassenden thermoplastischen Brandschutzfolie einlagig beschichtet wird, und wobei die thermoplastische Brandschutzfolie bei Raumtemperatur fest oder viskoelastisch ist und bei einer unterhalb der Reaktionstemperatur des mindestens einen Flammschutzadditivs liegenden Temperatur Klebeigenschaften aufweist.

Kerngedanke der vorliegenden Erfindung ist es, Faserverbundkunststoffe, insbesondere Organobleche, mit einem Brandschutz auszustatten, in dem diese mit einer thermoplastischen Brandschutzfolie beschichtet werden. Auf diese Weise ist ein einfacher, kostengünstiger, aber wirksamer Brandschutz geschaffen, so dass ein nach dem erfindungsgemäßen Verfahren hergestelltes Faserverbundkunststoff-Bauteil insbesondere auch in Bereichen eingesetzt werden kann, in denen zwar ein geringes Gewicht von Konstruktionen erwünscht ist, gleichzeitig jedoch erhöhte Anforderungen an den Brandschutz gestellt werden, wie beispielsweise im Schiffbau, im Offshore-Bereich, beim Innenausbau von Gebäuden oder bei Land- und Luftfahrzeugen.

Nach dem erfindungsgemäßen Verfahren hergestellte Faserverbundkunststoff-Halbzeuge oder Faserverbundkunststoff-Bauteile mit einer nur einlagigen Beschichtung mit einer thermoplastischen Brandschutzfolie weisen für viele Zwecke ausreichende Brennbarkeitsklassen bzw. Feuerwiderstandsfähigkeiten auf. Die Anforderungen können beispielsweise durch Anpassung der Dicke der Brandschutzfolie an den jeweiligen Zweck erfüllt werden. Die Foliendicke kann beispielsweise zwischen 0,5 und 2 mm liegen. Je nach Anforderung sind jedoch auch geringere oder größere Dicken möglich. Die thermoplastische Brandschutzfolie kann auch die äußerste Schicht eines Faserverbundkunststoff-Halbzeugs oder Faserverbundkunststoff-Bauteils sein.

Unter einem "Faserverbundkunststoff" (FVK) wird ein Werkstoff aus einer Kunststoffmatrix verstanden, in die Verstärkungsfasern eingebettet sind. Insbesondere werden unter dem Begriff faserverstärkte Kunststoffe mit thermoplastischer und/oder duroplastischer Kunststoffmatrix verstanden. Ein Beispiel für einen Faserverbundkunststoff mit thermoplastischer Kunststoffmatrix ist ein Organoblech.

Unter einem "Organoblech" werden hier endlosfaserverstärkte thermoplastische Verbundwerkstoffe verstanden. Ein Organoblech besteht aus einem Fasergewebe oder -gelege, das in eine thermoplastische Kunststoffmatrix eingebettet ist. Als Fasern kommen beispielsweise Glas-, Carbon-, Basalt- und Aramidfasern in Frage. Als thermoplastische Kunststoffe werden beispielsweise Polypropylen (PP), Polyamide (PA), thermoplastisches Polyurethan (TPU) etc. verwendet. Organobleche werden gegebenenfalls auch als "Kunststoffbleche" bezeichnet.

Unter einem "Faserverbundkunststoff-Bauteil" wird hier ein Bauteil verstanden, das aus einem Faserverbundkunststoff, insbesondere einem Faserverbundkunststoff mit thermoplastischer oder duroplastischer Matrix, besteht. Unter einem "Organoblech-Bauteil" wird hier ein aus einem Organoblech-Halbzeug geformtes Bauteil verstanden.

Unter einem "Faserverbundkunststoff-Halbzeug" wird hier ein vorzugsweise flächiges, noch nicht zu einem fertigen Bauteil verarbeitetes Vorprodukt verstanden, das aus einem Faserverbundkunststoff, insbesondere einem Faserverbundkunststoff mit thermoplastischer oder duroplastischer Matrix, besteht. Unter einem "Organoblech-Halbzeug" wird hier ein in der Regel flächiges plattenförmiges noch nicht zu einem fertigen Bauteil verformtes Organoblech verstanden.

Unter einem "Flammschutzadditiv", ggfs. auch als "Flammschutzmittel" oder "Flammschutzmaterial" bezeichnet, wird hier ein Stoff oder eine Stoffzusammensetzung verstanden, der bzw. die eine brandhemmende Wirkung, also eine die Ausbreitung eines Brandes einschränkende, verlangsamende oder verhindernde Wirkung entfaltet. Beispiele für Flammschutzadditive sind intumeszierende Materialien wie Blähgraphit oder Wasser abspaltende Stoffe wie Aluminiumhydroxid. Der Begriff umfasst auch zwei oder mehrere verschiedene unabhängig voneinander oder synergistisch zusammen brandhemmend wirkende Stoffe oder Stoffzusammensetzungen.

Unter der "Reaktionstemperatur eines Flammschutzadditivs" wird hier die Temperatur verstanden, bei der die flammhemmende Wirkung des Flammschutzadditivs einsetzt, beispielsweise ein Stoff intumesziert oder Wasser freisetzt. Im Falle mehrerer verschiedener Flammschutzadditive bezieht sich dieser Ausdruck vorzugsweise auf den Stoff oder die Stoffzusammensetzung mit dem höchsten Anteil und/oder mit der niedrigsten Reaktionstemperatur.

Unter einem "intumeszierendem Material", hier ggfs. auch als "Dämmschichtbildner", "intumeszierender Stoff" oder "intumeszierendes Flammschutzadditiv" bezeichnet, wird hier ein Material verstanden, das bei Raumtemperatur ein vergleichsweise geringes Volumen aufweist und unter Hitzeeinwirkung, d.h. bei Überschreiten einer als "Reaktionstemperatur" bezeichneten Temperatur, beispielsweise im Bereich von 150 °C bis 200 °C, eine deutliche Volumenzunahme erfährt, vorzugsweise unter Erzeugung eines erheblichen Blähdrucks von z.B. 1-2 N/mm². In der Regel wird bei einem solchen Material unter Wärmeeinwirkung, d.h. bei Überschreiten einer bestimmten als "Reaktionstemperatur" bezeichneten Temperatur, z.B. 150 °C, eine stark wärmedämmende, thermisch weitgehend stabile Schaumschicht gebildet, die die dahinter liegenden bzw. davon umschlossenen Materialien schützt. Der Schaumfaktor, d.h. das Verhältnis zwischen der Schichtdicke des intumeszierenden Materials im aufgeschäumten Zustand und der Schichtdicke des intumeszierenden Materials vor dem Aufschäumen, beträgt vorzugsweise mindestens 1,5, weiter bevorzugt mindestens 2, 3, 4, 5, 6, 8 oder mindestens 10, besonders bevorzugt mindestens 15, 20, 30, 40, 50 oder 60. Ein Beispiel für ein intumeszierendes Material ist Blähgraphit.

Unter einer "thermoplastischen Brandschutzfolie" wird hier eine Brandschutzfolie verstanden, die thermoplastische Eigenschaften aufweist, d.h., die in einem bestimmten Temperaturbereich reversibel verformbar ist. Der Ausdruck "fest" in Zusammenhang mit einer Brandschutzfolie bedeutet hier, dass die Brandschutzfolie nicht flüssig oder gasförmig, vorzugsweise formstabil ist. "Viskoelastisch" bedeutet ein teilweise elastisches, teilweise viskoses Materialverhalten. Die Brandschutzfolie ist dabei nicht flüssig, d.h. der Speichermodul des viskoelastischen Materials, aus dem die Folie besteht, ist größer als der Verlustmodul. Der Begriff "feste oder viskoelastische thermoplastische Brandschutzfolie" schließt Brandschutzfolien ein, die aus einer flüssigen Dispersion hergestellt sind, beispielsweise durch Trocknen einer flüssigen Dispersion, die einen Thermoplasten oder eine Thermoplasten-Mischung und mindestens ein Flammenschutzadditiv umfasst, und nach dem Trocknen fest oder viskoelastisch sind. Ebenso schließt die Formulierung, wonach ein Faserverbundkunststoff-Halbzeug oder Faserverbundkunststoff-Bauteil "mit einer festen oder viskoelastischen Brandschutzfolie beschichtet wird", die Beschichtung mit einer derartigen Folie im Nassverfahren ein, beispielsweise eine Beschichtung durch Aufbringen und Trocknen einer flüssigen Dispersion, die einen Thermoplasten oder eine Thermoplasten-Mischung und mindestens ein Flammenschutzadditiv umfasst, wodurch eine feste oder viskoelastische Brandschutzfolie resultiert. Der Begriff "Trocknen" umfasst dabei sowohl aktives Trocknen, beispielsweise mittels Wärme, als auch Trocknenlassen bei Raumtemperatur.

Der Begriff "einlagig beschichtet" in Bezug auf die Brandschutzfolie bedeutet, dass die Folie lediglich in einer einzigen Schicht aufgebracht ist. Das schließt ein, dass nicht mehrere Folien in zwei oder mehr übereinander liegenden Schichten, ob mit oder ohne etwaige Zwischenschichten aus anderem Material, vorhanden sind.

Die Temperatur, bei der die thermoplastische Folie auf ein Faserverbundkunststoff-Bauteil oder -Halbzeug aufgebracht wird, wird hier gegebenenfalls auch als "Verarbeitungstemperatur" bezeichnet. Insbesondere in Fällen, in denen ein Faserverbundkunststoff-Halbzeug mit thermoplastischer Matrix, z.B. ein Organoblech-Halbzeug, mittels Thermoformung zu einem Faserverbundkunststoff-Bauteil geformt wird, kann dies gleichzeitig auch die Temperatur sein, bei der die Formung des Faserverbundkunststoff-Halbzeugs zu einem Faserverbundkunststoff-Bauteil erfolgt.

Ein Faserverbundkunststoff-Halbzeug oder Faserverbundkunststoff-Bauteil kann in einer Ausführungsform des erfindungsgemäßen Verfahrens beispielsweise mit einer thermoplastischen Brandschutzfolie beschichtet werden, indem eine flüssige Dispersion, die einen Thermoplasten oder eine Thermoplasten-Mischung und mindestens ein Flammenschutzadditiv umfasst, auf eine Oberfläche des Faserverbundkunststoff-Halbzeugs oder -Bauteils aufgestrichen oder aufgespritzt und getrocknet wird. Im Falle eines Faserverbundkunststoff-Halbzeugs mit thermoplastischer Matrix, beispielsweise eines Organoblech-Halbzeugs, kann die so aufgebrachte Brandschutzfolie aufgrund ihrer thermoplastischen Eigenschaften zusammen mit dem Faserverbundkunststoff-Halbzeug geformt werden, so dass das fertige Faserverbundkunststoff-Bauteil, beispielsweise Organoblech-Bauteil, mit einer an dessen Konturen angepassten Brandschutzfolie versehen ist.

In einer alternativen Ausführungsform des erfindungsgemäßen Verfahrens erfolgt die Beschichtung mit der thermoplastischen Brandschutzfolie im Trockenverfahren, d.h. mittels einer vorgefertigten bei Raumtemperatur festen oder viskoelastischen thermoplastischen Brandschutzfolie. Die Beschichtung des Faserverbundkunststoff-Halbzeugs oder Faserverbundkunststoff-Bauteils mit der thermoplastischen Brandschutzfolie kann bei dieser Ausgestaltung mit im Stand der Technik bekannten Thermoformverfahren, beispielsweise mittels Vakuumthermoformens, erfolgen. Die Beschichtung eines Faserverbundkunststoff-Halbzeugs, beispielsweise eines Organoblech-Halbzeugs, kann jedoch auch mittels eines beliebigen Thermopressverfahrens vorgenommen werden, ohne dass hierbei eine Verformung des Halbzeugs erfolgt. Auch im Trockenverfahren kann insbesondere im Falle eines Faserverbundkunststoff-Halbzeugs mit thermoplastischer Matrix, z.B. eines Organoblech-Halbzeugs, die Aufbringung der Brandschutzfolie während der Formung des Halbzeugs zum fertigen Bauteil erfolgen.

Die thermoplastische Brandschutzfolie umfasst mindestens ein Flammschutzadditiv, beispielsweise ein intumeszierendes Material, und ist bei Raumtemperatur (20° C) fest oder viskoelastisch.

Vorzugweise umfasst oder besteht die thermoplastische Brandschutzfolie aus mindestens einem in ein thermoplastisches Matrixmaterial eingebetteten Flammschutzadditiv. Das mindestens eine Flammschutzadditiv ist oder umfasst vorzugsweise ein intumeszierendes Material, besonders bevorzugt Blähgraphit. Für den Fall, dass mehr als ein Flammschutzadditiv eingesetzt wird, ist oder umfasst vorzugsweise wenigstens eines davon ein intumeszierendes Material. Das Matrixmaterial umfasst vorzugsweise mindestens einen Thermoplasten, bevorzugt Polyamid, Polylactat, Polymethylmethacrylat, Polystyrol, Polyetheretherketon, Polyvinylchlorid, Polyolefin, Polyester, Polyacrylat, thermoplastisches Polyurethan und/oder ein Ethylen/Vinylacetat-Copolymer, oder besteht daraus. Vorzugsweise handelt es sich bei dem Thermoplasten um ein Ethylen-Vinylacetat-Copolymer. Ein geeignetes Folienmaterial aus Ethylen-Vinylacetat-Copolymer kann beispielsweise erhalten werden durch Ausstreichen und Trocknenlassen einer einen Thermoplasten oder eine Thermoplasten-Mischung enthaltenden flüssigen Dispersionsfarbe, aus beispielsweise einer 55%igen wässrigen Dispersion einer Ethylen-Vinylacetat-Mischung und 45 % Flammschutzadditiv(en). Eine geeignete flüssige Dispersionsfarbe ist beispielsweise unter der Bezeichung PYRO-SAFE DG-S, eine bereits verarbeitungsfertig konfektionierte Brandschutzfolie unter der Bezeichnung PYRO-SAFE DG-OA kommerziell erhältlich (svt Brandschutz Vertriebsgesellschaft mbH International, Seevetal, Deutschland, www.svt.de).

Bevorzugt wird eine thermoplastische Brandschutzfolie verwendet, die erst bei einer Temperatur oberhalb Raumtemperatur (20 °C), beispielsweise bei einer Temperatur von ≥ 80 °C Klebeigenschaften aufweist. Vorzugsweise entfalten sich die Klebeigenschaften der thermoplastischen Brandschutzfolie erst oder zumindest erst in praktisch nutzbarem Ausmaß bei einer Temperatur oberhalb Raumtemperatur, vorzugsweise bei einer Temperatur von mindestens 15 °C, 20 °C, 25 °C, 30 °C, 35 °C, 40 °C, 45 °C, 50 °C, 55 °C oder 60 °C oberhalb Raumtemperatur. Die Temperatur, bei der die Brandschutzfolie Klebeigenschaften aufweist oder entwickelt, liegt dabei unterhalb der Reaktionstemperatur des Flammschutzadditivs, beispielsweise des intumeszierenden Materials.

Die Beschichtung mit der thermoplastischen Brandschutzfolie erfolgt vorzugsweise mittels Thermoformens, bevorzugt mittels Vakuumthermoformens. Entsprechende Vorrichtungen zur Durchführung des Verfahrens, beispielsweise Vakuumthermopressen, sind im Stand der Technik bekannt.

Die Verarbeitungstemperatur, das heißt diejenige Temperatur, bei der die Thermoformung stattfindet, liegt bevorzugt bei oder oberhalb der Temperatur, ab der die thermoplastische Brandschutzfolie Klebeigenschaften aufweist. Die Reaktionstemperatur des mindestens einen Flammschutzadditivs, beispielsweise eines intumeszierenden Materials, liegt dabei soweit oberhalb der Verarbeitungstemperatur, dass das mindestens eine Flammschutzadditiv nicht oder praktisch nicht reagiert. Die Temperaturdifferenz zwischen Verarbeitungstemperatur und Reaktionstemperatur beträgt vorzugsweise mindestens 10 °C, weiter bevorzugt mindestens 20 °C, 25 °C, 30 °C, 35 °C, 40 °C oder 45 °C, besonders bevorzugt mindestens 50 °C, 55 °C, 60 °C, 65 °C oder 70 °C. Bei einer Verarbeitungstemperatur von ≥ 80 °C kann die Reaktionstemperatur beispielsweise ≥ 150 °C betragen.

Zur Herstellung eines brandgeschützten Faserverbundkunststoff-Bauteils mit thermoplastischer Matrix, z.B. eines Organoblech-Bauteils, nach dem erfindungsgemäßen Verfahren kann dessen Beschichtung mit der ggfs. vorgefertigten thermoplastischen Brandschutzfolie bei oder nach der Thermoformung des Bauteils erfolgen. In einer Ausführungsform erfolgt die Beschichtung mit einer thermoplastischen Brandschutzfolie beim Thermoformen eines Faserverbundkunststoff-Halbzeugs mit thermoplastischer Matrix zu dem Faserverbundkunststoff-Bauteil, beispielsweise in einer Vakuumthermopresse. Dabei können beispielsweise ein Faserverbundkunststoff-Halbzeug mit thermoplastischer Matrix und eine separate vorgefertigte feste oder viskoelastische thermoplastische Brandschutzfolie in im Stand der Technik bekannter Weise in einer Vakuumthermopresse angeordnet und verpresst werden. Durch das Verpressen bei einer geeigneten Temperatur, die beispielsweise in bekannter Weise durch Infrarotstrahlung erzeugt werden kann, wird das gewünschte Faserverbundkunststoff-Bauteil, beispielsweise Organoblech-Bauteil, geformt und im selben Arbeitsgang mit der Brandschutzfolie beschichtet. Die Thermoformung erfolgt bei einer Temperatur, bei der die thermoplastische Brandschutzfolie Klebeigenschaften aufweist, so dass die thermoplastische Brandschutzfolie mit dem Faserverbundkunststoff-Bauteil verklebt wird, ohne einen brandschutztechnisch ggf. kritischen Kleber zusätzlich zu benötigen.

Alternativ kann die Beschichtung eines Faserverbundkunststoff-Bauteils mit der thermoplastischen Brandschutzfolie auch nach dessen Herstellung bzw. Formung erfolgen. Dies gilt sowohl für Faserverbundkunststoff-Bauteile mit thermoplastischer Matrix als auch für solche mit beispielsweise duroplastischer Matrix. Dazu kann beispielsweise das vorgefertigte Faserverbundkunststoff-Bauteil zusammen mit einer thermoplastischen Brandschutzfolie in einer Vakuumthermopresse angeordnet und in an sich bekannter Weise verpresst werden, so dass das Faserverbundkunststoff-Bauteil mit der thermoplastischen Brandschutzfolie beschichtet wird, ohne dass das Faserverbundkunststoff-Bauteil dabei umgeformt wird. Dies geschieht bei einer Temperatur, bei der die thermoplastische Brandschutzfolie Klebeigenschaften aufweist, so dass Faserverbundkunststoff-Bauteil und thermoplastische Brandschutzfolie miteinander verklebt werden.

Das Faserverbundkunststoff-Halbzeug oder Faserverbundkunststoff-Bauteil kann einseitig oder beidseitig mit einer thermoplastischen Brandschutzfolie beschichtet werden. Vorzugsweise ist wenigstens eine Fläche beschichtet, die potentiell einem Feuer ausgesetzt sein kann.

In einem zweiten Aspekt betrifft die vorliegende Erfindung auch ein brandgeschütztes Faserverbundkunststoff-Halbzeug oder Faserverbundkunststoff-Bauteil, wobei auf mindestens einer Oberfläche des Faserverbundkunststoff-Halbzeugs oder Faserverbundkunststoff-Bauteils eine mindestens ein Flammschutzadditiv umfassende thermoplastische Brandschutzfolie einlagig angeordnet ist, die bei einer unterhalb der Reaktionstemperatur des mindestens einen Flammschutzadditivs liegenden Temperatur Klebeigenschaften auf. Die thermoplastische Brandschutzfolie ist mit der Oberfläche des Faserverbundkunststoff-Halbzeugs oder Faserverbundkunststoff-Bauteils verklebt. Besonders bevorzugt handelt es sich bei dem Faserverbundkunststoff-Halbzeug oder Faserverbundkunststoff-Bauteil um ein Organoblech-Halbzeug oder Organoblech-Bauteil.

Bei dem mindestens einen Flammschutzadditiv handelt es sich vorzugsweise um ein intumeszierendes Material, besonders bevorzugt um Blähgraphit. Auch eine Mehrzahl von Flammschutzadditiven kann eingesetzt werden, wobei wenigstens eines davon vorzugsweise ein intumeszierendes Material ist.

Die thermoplastische Brandschutzfolie weist bei einer unterhalb der Reaktionstemperatur des mindestens einen Flammschutzadditivs, z.B. eines intumeszierenden Materials, liegenden Temperatur Klebeigenschaften auf. Beispielsweise kann das Flammschutzadditiv eine Reaktionstemperatur von ≥ 150 °C aufweisen und die thermoplastische Brandschutzfolie bei einer Temperatur von ≥ 80 °C Klebeigenschaften aufweisen. Vorzugsweise entfalten sich die Klebeigenschaften der thermoplastische Brandschutzfolie erst oder zumindest erst in praktisch nutzbarem Ausmaß bei einer Temperatur oberhalb Raumtemperatur, vorzugsweise bei einer Temperatur von mindestens 15 °C, 20 °C, 25 °C, 30 °C, 35 °C, 40 °C, 45 °C, 50 °C, 55 °C oder 60 °C oberhalb Raumtemperatur. Die Reaktionstemperatur des mindestens einen Flammschutzadditivs liegt dabei soweit oberhalb der Temperatur, bei der die thermoplastische Brandschutzfolie Klebeigenschaften aufweist, dass das mindestens einer Flammschutzadditiv nicht reagiert, beispielsweise nicht intumesziert, wenn die thermoplastische Brandschutzfolie mittels eines thermischen Pressverfahrens, beispielsweise eines Vakuumthermopressverfahrens, mit der Oberfläche des Faserverbundkunststoff-Halbzeugs oder Faserverbundkunststoff-Bauteils verklebt wird. Die Temperaturdifferenz zwischen der Temperatur, bei der die thermoplastische Brandschutzfolie Klebeigenschaften aufweist, und der Reaktionstemperatur beträgt vorzugsweise mindestens 10 °C, weiter bevorzugt mindestens 20 °C, 25 °C, 30 °C, 35 °C, 40 °C oder 45 °C, besonders bevorzugt mindestens 50 °C, 55 °C, 60 °C, 65 °C oder 70 °C.

Die thermoplastische Brandschutzfolie besteht vorzugsweise aus oder umfasst mindestens ein in ein thermoplastisches Matrixmaterial eingebettetes Flammschutzadditiv, wobei das mindestens eine Flammschutzadditiv vorzugweise ein intumeszierendes Material, besonders bevorzugt Blähgraphit ist. Das Matrixmaterial ist oder umfasst mindestens einen Thermoplasten wobei der mindestens eine Thermoplast bevorzugt ausgewählt ist aus Polyamid, Polylactat, Polymethylmethacrylat, Polystyrol, Polyetheretherketon, Polyvinylchlorid, Polyolefin, Polyester, Polyacrylat, thermoplastischem Polyurethan und/oder einer Ethylen-Vinylacetat-Mischung. Besonders bevorzugt ist oder enthält das Matrixmaterial eine Ethylen-Vinylacetat-Mischung. Ein geeignetes Folienmaterial aus Ethylen-Vinylacetat-Copolymer kann beispielsweise erhalten werden durch Ausstreichen und Trocknenlassen einer einen Thermoplasten oder eine Thermoplasten-Mischung enthaltenden flüssigen Dispersionsfarbe aus beispielsweise einer Dispersion einer 55%igen Ethylen-Vinylacetat-Mischung in Wasser und 45 % Flammschutzadditiv(en). Eine geeignete Dispersionsfarbe ist unter der Bezeichnung "PYRO-SAFE DG-S" kommerziell erhätlich (svt Brandschutz Vertriebsgesellschaft mbH International, Seevetal, Deutschland, www.svt.de). Auch eine bereits einsatzfertig konfektionierte Folie ist kommerziell erhältlich ("PYRO-SAFE DG-OA", svt Brandschutz Vertriebsgesellschaft mbH International, Seevetal, Deutschland).

In einem dritten Aspekt betrifft die Erfindung auch ein brandgeschütztes Faserverbundkunststoff-Halbzeug oder Faserverbundkunststoff-Bauteil, insbesondere Organoblech-Halbzeug oder Organoblech-Bauteil, das nach dem erfindungsgemäßen Verfahren hergestellt oder herstellbar ist.

Die Erfindung wird im Folgenden anhand einer beigefügten Figur rein zu Veranschaulichungszwecken näher erläutert.
Figur 1. Schematische Darstellung einer Ausführungsform des erfindungsgemäßen Verfahrens zur Herstellung eines Organoblech-Bauteils.
Figur2. Schematische Darstellung einer anderen Ausführungsform des erfindungsgemäßen Verfahrens zur Herstellung eines Organoblech-Bauteils.

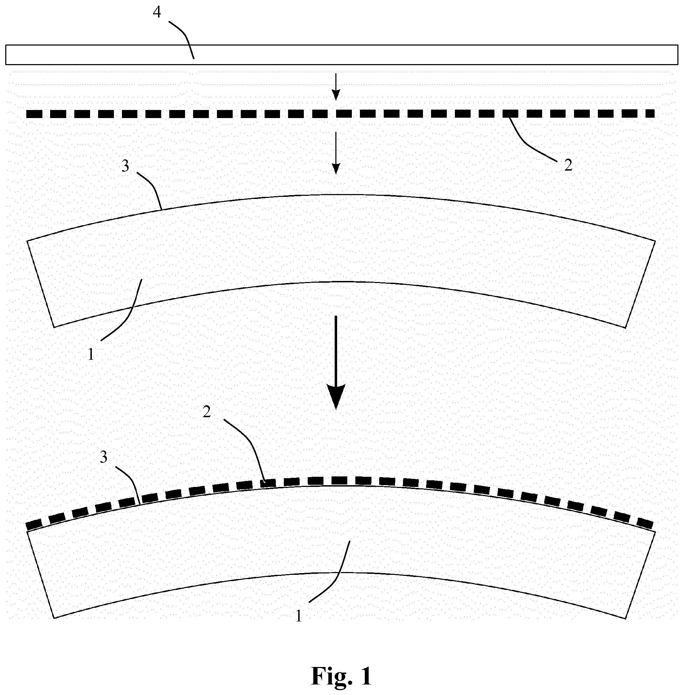

Figur 1 zeigt stark vereinfacht und schematisch eine Ausführungsform eines erfindungsgemäßen Verfahrens zur Herstellung eines erfindungsgemäßen Faserverbundkunststoff-Bauteils 1, hier eines Organoblech-Bauteils. Eine einzelne Lage einer thermoplastischen Brandschutzfolie 2 wird in einer hier nicht dargestellten Vakuumthermopresse auf einer Oberfläche 3 eines bereits vorgefertigten (vorgeformten) Organoblech-Bauteils 1 angeordnet. Bei einer Temperatur, bei der die thermoplastische Brandschutzfolie 2 Klebeigenschaften aufweist, beispielsweise bei 80 °C, werden thermoplastische Brandschutzfolie 2 und Organoblech-Bauteil 1 mit Hilfe einer Silikonmembran 4 miteinander verpresst, wodurch das Organoblech-Bauteil 1 mit der thermoplastischen Brandschutzfolie 2 verklebt wird.

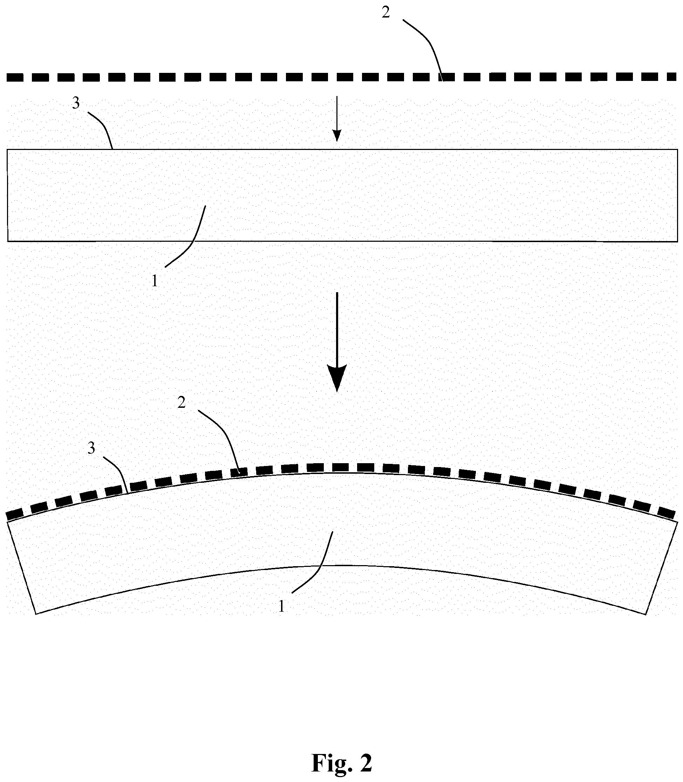

Figur 2 zeigt vereinfacht und schematisch eine weitere Ausführungsform des erfindungsgemäßen Verfahrens zur Herstellung eines erfindungsgemäßen Faserverbundkunststoff-Bauteils 1, hier eines Organoblech-Bauteils. Eine einzelne Lage einer thermoplastische Brandschutzfolie 2 wird in einer hier nicht dargestellten Vakuumthermopresse auf einer Oberfläche 3 eines Organoblech-Halbzeugs 1 angeordnet. Bei einer Temperatur, bei der die thermoplastische Brandschutzfolie 2 Klebeigenschaften aufweist, beispielsweise bei 80 °C, werden thermoplastische Brandschutzfolie 2 und Organoblech-Halbzeug 1, beispielsweise mittels einer hier nicht extra dargestellten Silikonmembran 4, miteinander verpresst, wobei das Organoblech-Halbzeug 1 hier in einem Arbeitsgang sowohl in die gewünschte Form gebracht als auch mit der thermoplastischen Brandschutzfolie 2 verklebt wird.

## Patentansprüche

1. Verfahren zur Herstellung eines brandgeschützten Faserverbundkunststoff-Halbzeugs oder Faserverbundkunststoff-Bauteils, wobei ein Faserverbundkunststoff-Halbzeug oder ein Faserverbundkunststoff-Bauteil mit einer mindestens ein Flammschutzadditiv umfassenden thermoplastischen Brandschutzfolie einlagig beschichtet wird, und wobei die thermoplastische Brandschutzfolie bei Raumtemperatur fest oder viskoelastisch ist und bei einer unterhalb der Reaktionstemperatur des mindestens einen Flammschutzadditivs liegenden Temperatur Klebeigenschaften aufweist.

2. Verfahren nach Anspruch 1, wobei das Faserverbundkunststoff-Halbzeug oder Faserverbundkunststoff-Bauteil ein Organoblech-Halbzeug oder Organoblech-Bauteil ist.

3. Verfahren nach einem der Ansprüche 1 oder 2, wobei die Beschichtung mit der thermoplastischen Brandschutzfolie mittels Thermoformens, bevorzugt mittels Vakuumthermoformens, erfolgt, und wobei die Reaktionstemperatur des mindestens einen Flammschutzadditivs oberhalb der beim Thermoformen eingesetzten Temperatur liegt.

4. Verfahren nach Anspruch 3, wobei ein brandgeschütztes Faserverbundkunststoff-Bauteil hergestellt wird, und wobei die Beschichtung mit der thermoplastischen Brandschutzfolie
a. beim Thermoformen eines Faserverbundkunststoff-Halbzeugs mit thermoplastischer Matrix, vorzugsweise eines Organoblech-Halbzeugs, zu einem Faserverbundkunststoff-Bauteil, vorzugsweise Organoblech-Bauteil, erfolgt, oder
b. nach dem vorherigen Thermoformen eines Faserverbundkunststoff-Halbzeugs mit thermoplastischer Matrix, vorzugsweise eines Organoblech-Halbzeugs, zu einem Faserverbundkunststoff-Bauteil, bevorzugt Organoblech-Bauteil, erfolgt, oder
c. nach dem vorherigen Herstellen eines Faserverbundkunststoff-Bauteils mit duroplastischer Kunststoffmatrix erfolgt.

5. Verfahren nach einem der vorhergehenden Ansprüche, wobei die thermoplastische Brandschutzfolie mindestens ein in ein thermoplastisches Matrixmaterial eingebettetes Flammschutzadditiv umfasst oder aus mindestens einem in ein thermoplastisches Matrixmaterial eingebetteten Flammschutzadditiv besteht.

6. Verfahren nach einem der Ansprüche 1 bis 5, wobei die thermoplastische Brandschutzfolie bei einer Temperatur von ≥ 80 °C Klebeigenschaften aufweist und das Flammschutzadditiv eine Reaktionstemperatur von ≥ 150 °C aufweist.

7. Verfahren nach einem der vorhergehenden Ansprüche, wobei das mindestens eine Flammschutzadditiv ein intumeszierendes Material, bevorzugt Blähgraphit umfasst oder ist.

8. Brandgeschütztes Faserverbundkunststoff-Halbzeug oder Faserverbundkunststoff-Bauteil (1), insbesondere Organoblech-Halbzeug oder Organoblech-Bauteil, wobei auf mindestens einer Oberfläche (3) des Faserverbundkunststoff-Halbzeugs oder Faserverbundkunststoff-Bauteils (1) eine einzelne Lage einer mindestens ein Flammschutzadditiv umfassenden thermoplastischen Brandschutzfolie (2) angeordnet ist, und wobei die thermoplastische Brandschutzfolie (2) bei einer unterhalb der Reaktionstemperatur des mindestens einen Flammschutzadditivs liegenden Temperatur Klebeigenschaften aufweist.

9. Brandgeschütztes Faserverbundkunststoff-Halbzeug oder Faserverbundkunststoff-Bauteil (1) nach Anspruch 8, wobei das Faserverbundkunststoff-Halbzeug oder Faserverbundkunststoff-Bauteil ein Organoblech-Halbzeug oder Organoblech-Bauteil ist.

10. Brandgeschütztes Faserverbundkunststoff-Halbzeug oder Faserverbundkunststoff-Bauteil (1) nach Anspruch 8 oder 9, wobei das Flammschutzadditiv eine Reaktionstemperatur von ≥ 150 °C aufweist und die thermoplastische Brandschutzfolie (2) bei einer Temperatur von ≥ 80 °C Klebeigenschaften aufweist.

11. Brandgeschütztes Faserverbundkunststoff-Halbzeug oder Faserverbundkunststoff-Bauteil (1) nach einem der Ansprüche 8 bis 10, wobei die thermoplastische Brandschutzfolie (2) mindestens ein in ein thermoplastisches Matrixmaterial eingebettetes Flammschutzadditiv umfasst oder aus mindestens einem in ein thermoplastisches Matrixmaterial eingebetteten Flammschutzadditiv besteht.

12. Brandgeschütztes Faserverbundkunststoff-Halbzeug oder Faserverbundkunststoff-Bauteil (1) nach einem der Ansprüche 8 bis 11, wobei das mindestens eine Flammschutzadditiv ein intumeszierendes Material, bevorzugt Blähgraphit umfasst oder ist.

## Claims

1. A method for producing a fire protected semifinished fiber-reinforced plastic product or fiber-reinforced plastic component, wherein a semifinished fiber-reinforced plastic product or a fiber-reinforced plastic component is coated with a single layer of a thermoplastic fire protection film that comprises at least one flame retardant, and wherein the thermoplastic fire protection film is rigid or viscoelastic at room temperature and has adhesive properties at a temperature that lies below the reaction temperature of the at least one flame retardant.

2. The method according to claim 1, wherein the semifinished fiber-reinforced plastic product or the fiber-reinforced plastic component is a semifinished organic sheet product or an organic sheet component.

3. The method according to one of claims 1 or 2, wherein the coating with the thermoplastic fire protection film takes place by means of thermoforming, preferably by means of vacuum thermoforming, and wherein the reaction temperature of the at least one flame retardant lies above the temperature used during thermoforming.

4. The method according to claim 3, wherein a fire protected fiber-reinforced plastic component is produced, and wherein the coating with the thermoplastic fire protection film takes place
a. during thermoforming of a semifinished fiber-reinforced plastic product with thermoplastic matrix, preferably a semifinished organic sheet product, into a fiber-reinforced plastic component, preferably an organic sheet component, or
b. after prior thermoforming of a semifinished fiber-reinforced plastic product with thermoplastic matrix, preferably a semifinished organic sheet product, into a fiber-reinforced plastic component, preferably an organic sheet component, or
c. after the prior production of a fiber-reinforced plastic component with thermosetting matrix.

5. The method according to one of the preceding claims, wherein the thermoplastic fire protection film comprises at least one flame retardant that is embedded in a thermoplastic matrix material or consists of at least one flame retardant that is embedded in a thermoplastic matrix material.

6. The method according to one of claims 1 to 5, wherein the thermoplastic fire protection film has adhesive properties at a temperature ≥ 80°C and the flame retardant has a reaction temperature ≥ 150°C.

7. The method according to one of the preceding claims, wherein the at least one flame retardant comprises or is an intumescent material, preferably expanded graphite.

8. A fire protected semifinished fiber-reinforced plastic product or fiber-reinforced plastic component (1), particularly a semifinished organic sheet product or an organic sheet component, wherein a single layer of a thermoplastic fire protection film (2), which comprises at least one flame retardant, is arranged on at least one surface (3) of the semifinished fiber-reinforced plastic product or the fiber-reinforced plastic component (1), and wherein the thermoplastic fire protection film (2) has adhesive properties at a temperature that lies below the reaction temperature of the at least one flame retardant.

9. The fire protected semifinished fiber-reinforced plastic product or the fiber-reinforced plastic component (1) according to claim 8, wherein the semifinished fiber-reinforced plastic product or the fiber-reinforced plastic component is a semifinished organic sheet product or an organic sheet component.

10. The fire protected semifinished fiber-reinforced plastic product or the fiber-reinforced plastic component (1) according to claim 8 or 9, wherein the flame retardant has a reaction temperature ≥ 150°C and the thermoplastic fire protection film (2) has adhesive properties at a temperature ≥ 80°C.

11. The fire protected semifinished fiber-reinforced plastic product or the fiber-reinforced plastic component (1) according to one of claims 8 to 10, wherein the thermoplastic fire protection film (2) comprises at least one flame retardant that is embedded in a thermoplastic matrix material or consists of at least one flame retardant that is embedded in a thermoplastic matrix material.

12. The fire protected semifinished fiber-reinforced plastic product or the fiber-reinforced plastic component (1) according to one of claims 8 to 11, wherein the at least one flame retardant comprises or is an intumescent material, preferably expanded graphite.

## Revendications

1. Procédé de fabrication d'un produit semi-fini en matière plastique composite à base de fibres ou d'un composant en matière plastique composite à base de fibres protégé contre l'incendie, sachant qu'un produit semi-fini en matière plastique composite à base de fibres ou un composant en matière plastique composite à base de fibres est revêtu avec une couche d'au moins une feuille de protection contre l'incendie thermoplastique comprenant un additif de protection ignifuge et sachant que la feuille de protection contre l'incendie thermoplastique est résistante ou viscoélastique à température ambiante et comporte des propriétés d'adhérence à une température se situant en dessous de la température de réaction d'au moins un additive de protection ignifuge.

2. Procédé selon la revendication 1, sachant que le produit semi-fini en matière plastique composite à base de fibres ou composant en matière plastique composite à base de fibres est un produit semi-fini en tôle organique ou composant en tôle organique.

3. Procédé selon l'une quelconque des revendications 1 ou 2, sachant que le revêtement avec la feuille de protection ignifuge thermoplastique a lieu au moyen du thermoformage, de préférence au moyen de thermoformage sous vide et sachant que la température de réaction d'au moins un additif de protection ignifuge se situe au-dessus de la température mise en œuvre lors du thermoformage.

4. Procédé selon la revendication 3, sachant qu'un composant en matière plastique composite à base de fibres protégé contre l'incendie est fabriqué et sachant que le revêtement avec la feuille de protection ignifuge thermoplastique
a. a lieu lors du thermoformage d'un produit semi-fini en matière plastique composite à base de fibres avec matrice thermoplastique, de préférence un produit semi-fini de tôle organique, en un composant en matière plastique composite à base de fibres, de préférence un composant en tôle organique, ou
b. a lieu après le thermoformage précédent d'un produit semi-fini en matière plastique composite à base de fibres avec matrice thermoplastique, de préférence un produit semi-fini en tôle organique, en un composant en matière plastique composite à base de fibres, de préférence un composant en tôle organique, ou
c. a lieu après la fabrication précédente d'un composant en matière plastique composite à base de fibres avec matrice de matière plastique thermodurcissable.

5. Procédé selon l'une quelconque des revendications précédentes, sachant que la feuille de protection ignifuge thermoplastique comprend au moins un additif de protection ignifuge incorporé dans un matériau matriciel thermoplastique ou est composé d'au moins un additif de protection ignifuge incorporé dans un matériau matriciel thermoplastique.

6. Procédé selon l'une quelconque des revendications 1 à 5, sachant que la feuille de protection ignifuge thermoplastique comporte à une température de ≥ 80° C des propriétés d'adhérence et l'additif de protection ignifuge comporte une température de réaction de ≥ 150° C.

7. Procédé selon l'une quelconque des revendications précédentes, sachant qu'au moins un additif de protection ignifuge comprend ou est un matériau intumescent, de préférence du graphite expansé.

8. Produit semi-fini en matière plastique composite à base de fibres ou composant en matière plastique composite à base de fibres protégé contre l'incendie (1), en particulier produit semi-fini en tôle organique ou composant en tôle organique, sachant que sur au moins une surface (3) du produit semi-fini en matière plastique composite à base de fibres ou composant en matière plastique composite à base de fibres (1) est disposée une couche unique d'une feuille de protection ignifuge thermoplastique (2) comprenant au moins un additif de protection ignifuge et sachant que la feuille de protection ignifuge thermoplastique (2) comporte des propriétés d'adhérence à une température se situant en dessous de la température de réaction d'au moins un additif de protection ignifuge.

9. Produit semi-fini en matière plastique composite à base de fibres ou composant en matière plastique composite à base de fibres protégé contre l'incendie (1) selon la revendication 8, sachant que le produit semi-fini en matière plastique composite à base de fibres ou composant en matière plastique composite à base de fibres est un produit semi-fini en tôle organique ou un composant en tôle organique.

10. Produit semi-fini en matière plastique composite à base de fibres ou composant en matière plastique composite à base de fibres protégé contre l'incendie (1) selon l'une quelconque des revendications 8 ou 9, sachant que l'additif de protection ignifuge comporte une température de réaction de ≥ 150° C et la feuille de protection ignifuge thermoplastique (2) comporte à une température de ≥ 80° C des propriétés d'adhérence.

11. Produit semi-fini en matière plastique composite à base de fibres ou composant en matière plastique composite à base de fibres protégé contre l'incendie (1) selon l'une quelconque des revendications 8 à 10, sachant que la feuille de protection ignifuge thermoplastique (2) comprend au moins un additif de protection ignifuge incorporé dans un matériau matriciel thermoplastique ou est composé d'au moins un additif de protection ignifuge incorporé dans un matériau matriciel thermoplastique.

12. Produit semi-fini en matière plastique composite à base de fibres ou composant en matière plastique composite à base de fibres protégé contre l'incendie (1) selon l'une quelconque des revendications 8 à 11, sachant qu'au moins un additif de protection ignifuge comprend ou est un matériau intumescent, de préférence du graphite expansé.
